# EUROPEAN PATENT APPLICATION

(11) **EP 3 549 547 A1**
(43) Date of publication of application: **09.10.2019**
(21) Application number: 17875795.1
(22) Date of filing: 13.09.2017
(51) Int. Cl.: A61C 9/00

(54) **DENTAL TRAY SYSTEM**

(30) Priority: 29.11.2016 JP 2016231328
(71) Applicant: GC Corporation, Sunto-gun, Shizuoka 410-1307 (JP)
(72) Inventor: MICHII, Takayuki, Tokyo 174-8585 (JP)
(74) Representative: Müller-Boré & Partner Patentanwälte PartG mbB
(86) International application number: PCT/JP2017/033036
(87) International publication number: WO 2018/100838

(57) **Abstract**

A dental tray system includes a maxillary impression tray configured to be filled with an impression material and to take an impression of an upper jaw side of an oral cavity; a mandibular impression tray configured to be filled with the impression material and to take the impression of a lower jaw side of the oral cavity; and a support plate provided between the maxillary impression tray and the mandibular impression tray, and configured to movably support the maxillary impression tray and the mandibular impression tray in a front-to-rear direction and rotatably support the maxillary impression tray and the mandibular impression tray.

## Description

### TECHNICAL FIELD

The present invention relates to a dental tray system.

### BACKGROUND ART

In order to ensure preferable occlusion in a manufacture of dentures and the like, it is necessary to accurately perform bite registration of a patient. Accordingly, a dental impression tray for simultaneously obtaining impressions of a maxilla and a mandible is known, in which a maxillary impression tray and a mandibular impression tray, on each which an impression material is filled, are integrally arranged in an oral cavity (for example, refer to Patent Document 1) .

### PRIOR ART DOCUMENT

### PATENT DOCUMENT

Patent Document 1: Japanese Laid-Open Patent Publication No. 2001-333917

### SUMMARY OF THE INVENTION

### PROBLEMS TO BE SOLVED BY THE INVENTION

Occlusion states of the maxillary and the mandibular are different depending on the patient; the maxillary and the mandibular may be normal with no anteroposterior displacement, or one of the maxilla and the mandible may protrude anteriorly over the other. The dental impression tray described in Patent Document 1 described above fixes a maxillary impression tray and a mandibular impression tray with each other; hence, the dental impression tray may not correspond to an jaw position varying on each patient and may not be able to accurately obtain the bite registration.

An objective of the present invention is to provide a dental tray system, which has been made in view of the above and is capable of accurately performing the bite registration depending on the jaw position.

### MEANS FOR SOLVING THE PROBLEMS

According to one aspect of the present invention, a dental tray system includes a maxillary impression tray configured to be filled with an impression material and to take an impression of an upper jaw side in an oral cavity; a mandibular impression tray configured to be filled with the impression material and to take the impression of a lower jaw side in the oral cavity; and a support plate provided between the maxillary impression tray and the mandibular impression tray, and configured to movably support the maxillary impression tray and the mandibular impression tray in a front-to-rear direction and to rotatably support the maxillary impression tray and the mandibular impression tray.

### EFFECTS OF THE INVENTION

According to an embodiment of the present invention, a dental tray system is provided that can accurately perform bite registration depending on the jaw position.

### BRIEF DESCRIPTION OF THE DRAWINGS

FIG. 1 is a perspective view of a dental tray system in an embodiment.
FIG. 2 is a perspective view of a support plate in the embodiment.
FIG. 3 is a diagram illustrating the support plate in the embodiment.
FIG. 4 is a diagram illustrating a maxillary impression tray in the embodiment.
FIG. 5 is a diagram illustrating a mandibular impression tray in the embodiment.
FIG. 6 is a back view of the dental tray system in the embodiment.
FIG. 7 is a view illustrating a movement of the maxillary impression tray and the mandibular impression tray in the embodiment.
FIG. 8 is a diagram illustrating a state in which a right upper engagement pin is inserted into a right upper engagement groove, in the embodiment.
FIG. 9 is a diagram illustrating a state in which the right upper engagement pin rotates in the right upper engagement groove, in the embodiment.
FIG. 10 is a diagram illustrating an upper central pin of a maxillary impression tray detached from an upper central groove of the support plate.
FIG. 11 is a diagram illustrating how the maxillary impression tray rotates in the embodiment.
FIG. 12 is a side view of the dental tray system in the embodiment.
FIG. 13 is a side view of the dental tray system in the embodiment.

### EMBODIMENT OF THE INVENTION

Hereinafter, an embodiment of the present invention will be described with reference to the drawings. In each drawing, the same component parts may be denoted by the same reference numerals and duplicate descriptions may be omitted.

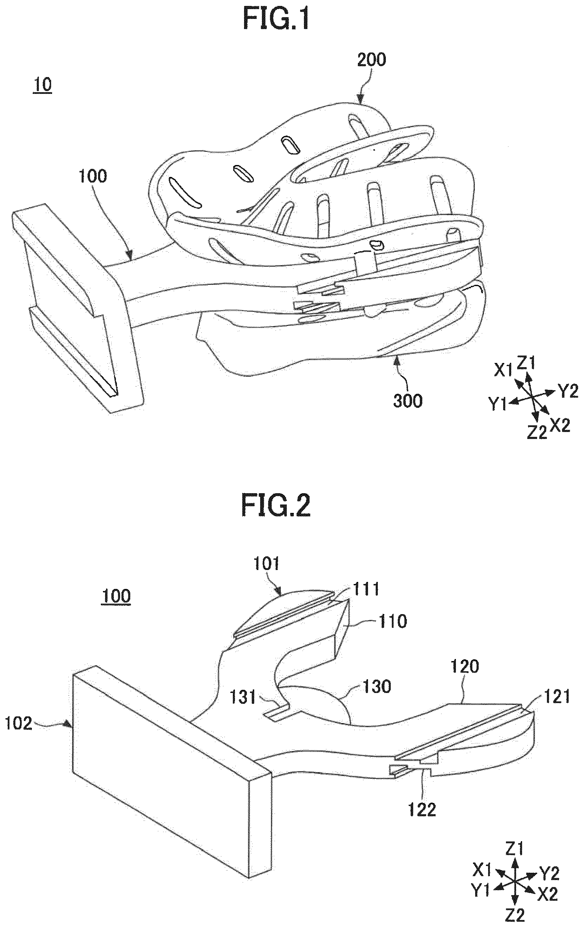

FIG. 1 is a perspective view of a dental tray system 10 in the embodiment. The dental tray system 10 is used for a bite registration of an edentulous jaw. In the following drawings, a X1X2 direction is a right-to-left direction of the dental tray system 10. A Y1Y2 direction is a front-to-rear direction of the dental tray system 10, and a Z1Z2 direction is an up-to-down direction of the dental tray system 10. In the following explanation, there are cases where a X1 direction indicates right, a X2 direction indicates left, a Y1 direction indicates front, a Y2 direction indicates rearward, a Z1 direction indicates upward, and a Z2 direction indicates downward.

As illustrated in FIG. 1, the dental tray system 10 has a support plate 100, a maxillary impression tray 200, and a mandibular impression tray 300.

The support plate 100 movably supports each of the maxillary impression tray 200 and the mandibular impression tray 300 in the forward and backward directions. An impression material is filled on the maxillary impression tray 200 to take an impression of an upper jaw side of an oral cavity. The impression material is filled on the mandibular impression tray 300 to take an impression of a lower jaw side of the oral cavity.

The support plate 100, the maxillary impression tray 200, and the mandibular impression tray 300 are formed, for example, of a resinous material. Each of the support plate 100, the maxillary impression tray 200, and the mandibular impression tray 300 may be formed of a metal material or the like, and may be formed from a different material.

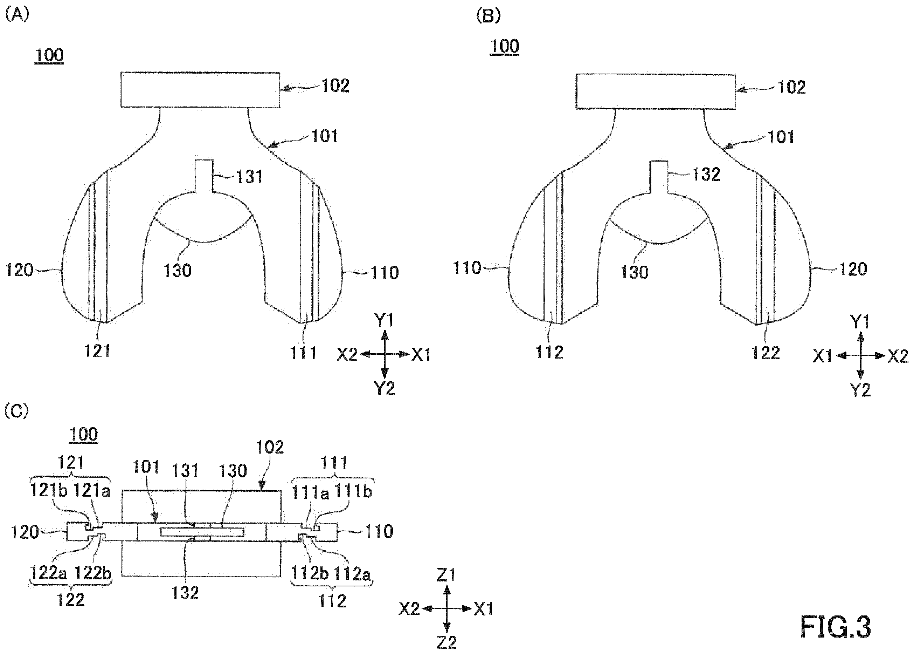

FIG. 2 is a perspective view of the support plate 100 in the embodiment. FIG. 3 is a diagram illustrating the support plate 100 in the embodiment. FIG. 3A is a top view of the support plate 100. FIG. 3B is a bottom view of the support plate 100, and FIG. 3C is a rear view of the support plate 100.

As illustrated in FIG. 2 and FIG. 3, the support plate 100 has a support plate body 101, a handle 102.

The support plate body 101 is a platelike member coupled to the handle 102. The support plate body 101 includes a right support portion 110 projecting from the handle 102 and branching to right and extending backward, and a left support portion 120 branching to left and extending backward. Also, the support plate body 101 includes a support platform 130 that protrudes backward from a central portion connecting the right support portion 110 to the left support portion 120.

On the right support portion 110, a right upper engagement groove 111 is formed on a top surface and a right lower engagement groove 112 is formed on a bottom surface. Each of the right upper engagement groove 111 and the right lower engagement groove 112 is formed parallel to the front-to-rear direction (Y1Y2 direction).

As illustrated in FIG. 3C, the right upper engagement groove 111 includes a groove 111a, and an engagement groove 111b formed by making a dent on a right side of the groove 111a. The right lower engagement groove 112 includes a groove 112a, and an engagement groove 112b formed by making a dent on a left side of the groove 112a.

On the left support portion 120, a left upper engagement groove 121 is formed on a top side and a left lower engagement groove 122 is formed on a bottom side. Each of the left upper engagement groove 121 and the left lower engagement groove 122 is formed parallel to the front-to-rear direction (Y1Y2 direction).

As illustrated in FIG. 3C, the left upper engagement groove 121 includes a groove 121a and an engagement groove 121b formed by making a dent on a left side of the groove 111a. The left lower engagement groove 122 includes a groove 122a and an engagement groove 122b formed by making a dent on a right side of the groove 122a.

Moreover, at a central portion, at which the right support portion 110 and the left support portion 120 are connected on the support plate body 101, an upper central groove 131 is formed on an upper surface side and a lower central groove 132 is formed on a lower surface side. Each of the upper central groove 131 and the lower central groove 132 is formed parallel to the front-to-rear direction (Y1Y2 direction) and is open on one rear end.

The handle 102 is formed in a rectangular plate shape and is coupled to the support plate body 101 on the back side. A user grasps the handle 102 to insert the dental tray system 10 to the oral cavity and to remove the dental tray system 10 from the oral cavity. Also, it is also possible to apply irregularities to the handle 102 and press the impression material to mark a midline, a pupil line, a tilt of a lip, and the like.

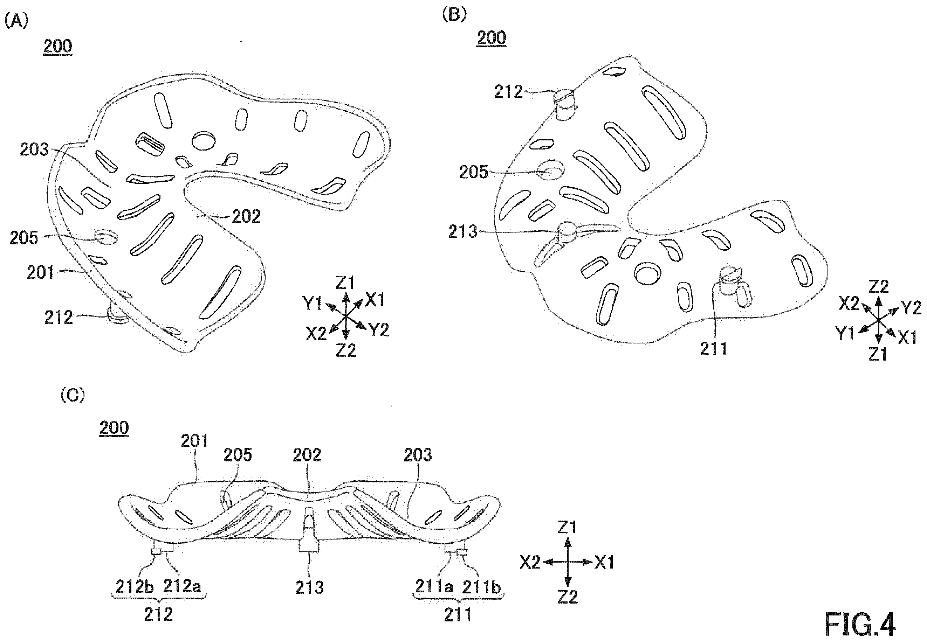

FIG. 4 is a diagram illustrating the maxillary impression tray 200 in the embodiment. FIG. 4A is a perspective view from a top side of the maxillary impression tray 200. FIG. 4B is a perspective view from a lower side of the maxillary impression tray 200. FIG. 4C is a back view of the maxillary impression tray 200.

The maxillary impression tray 200 is filled with on an impression material surface 203 between an outer edge 201 and an inner edge 202 to take an impression of the upper jaw side. As illustrated in FIG. 4, the outer edge 201 and the inner edge 202 are formed to curve upward from an outer end and an inner edge of the impression material surface 203, respectively.

On the impression material surface 203, a plurality of through holes 205 penetrating up-to-down direction are formed. The impression material filled on the impression material surface 203 is partially extruded from the through holes 205 to a lower surface side at the impression taiking. The impression material extruded from the through holes 205 to the lower surface side expands and is integrated with the maxillary impression tray 200 along with the impression material on the impression material surface 203.

On a lower surface of the maxillary impression tray 200, a right upper engagement pin 211, a left upper engagement pin 212, and an upper central pin 213 are formed. Each of the right upper engagement pin 211, the left upper engagement pin 212, and the upper central pin 213 is formed to project to a Z2 direction from the lower surface of the maxillary impression tray 200.

As illustrated in FIG. 4C, the right upper engagement pin 211 includes a pin body 211a having a cylindrical shape, and an engagement portion 211b projecting to a right side from a lower end of the pin body 211a. The right upper engagement pin 211 is inserted into the right upper engagement groove 111 of the support plate 100 such that the engagement portion 211b fits into and engages the engagement groove 111b.

As illustrated in FIG. 4C, the left upper engagement pin 212 includes a pin body 212a having a cylindrical shape, and an engagement portion 212b projecting to a left side from a lower end of the pin body 212a. The left upper engagement pin 212 is inserted into the left upper engagement groove 121 of the support plate 100 such that the engagement portion 212b fits into and engages the engagement groove 121b.

The upper central pin 213 is formed in a center portion of the maxillary impression tray 200 in the right-to-left direction (X1X2 direction). The upper central pin 213 is formed in a cylindrical shape and is inserted into the upper central groove 131 of the support plate 100.

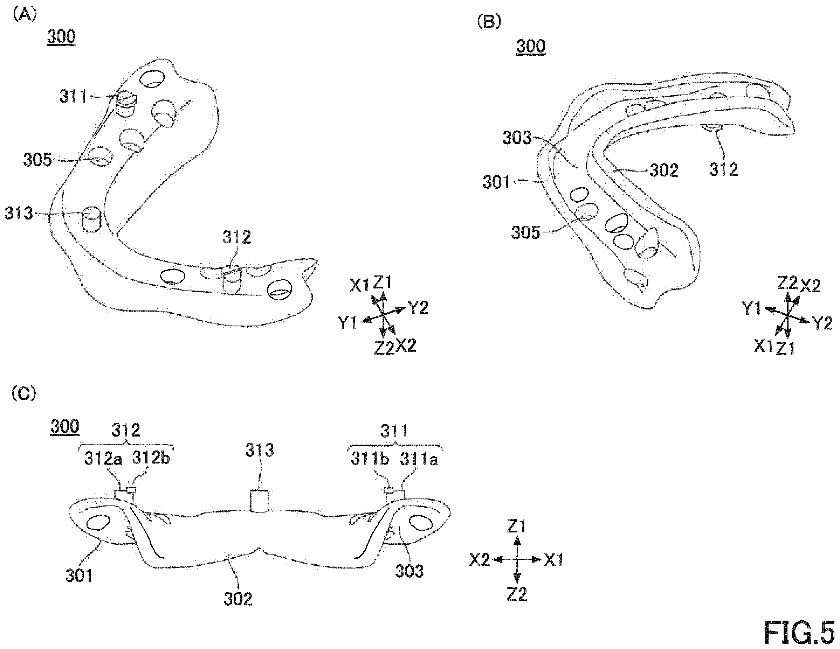

FIG. 5 is a diagram illustrating the mandibular impression tray 300 in the embodiment. FIG. 5A is a perspective view from a top side of the mandibular impression tray 300. FIG. 5B is a perspective view from a lower side of the mandibular impression tray 300. FIG. 5C is a back view of the mandibular impression tray 300.

The mandibular impression tray 300 is filled with on an impression material surface 303 between the outer edge 301 and the inner edge 302 to take the impression of the mandibular side within the oral cavity. As illustrated in FIG. 5, the outer edge 301 and the inner edge 302 are formed so as to curve downward from an outer end and an inner end of the impression material surface 303, respectively.

The impression material surface 303 is formed with the plurality of through holes 305 penetrating the up-to-down direction. The impression material on the impression material surface 303 is partially extruded from the through holes 305 to the upper surface at the impression taking. The impression material extruded from the through holes 305 to the top surface side expands and is integrated with the mandibular impression tray 300 along with the impression material on the impression material surface 303.

On an upper surface of the mandibular impression tray 300, a right lower engagement pin 311, a left lower engagement pin 312, and a lower central pin 313 are formed. Each of the right lower engagement pin 311, the left lower engagement pin 312, and the lower central pin 313 is formed to project from the upper surface of the mandibular impression tray 300 in the Z1 direction.

As illustrated in FIG. 5C, the right lower engagement pin 311 includes a pin body 311a having a cylindrical shape and an engagement portion 311b projecting to left from an upper end of the pin body 311a. The right lower engagement pin 311 is inserted into the right lower engagement groove 112 of the support plate 100 such that the engagement portion 311b fits into and engages the engagement groove 112b.

As illustrated in FIG. 5C, the left lower engagement pin 312 has a pin body 312a having a cylindrical shape, and an engagement portion 312b projecting to the right from the upper end of the pin body 312a. The left lower engagement pin 312 is inserted into the left lower engagement groove 122 of the support plate 100 such that the engagement portion 312b fits into and engages with the engagement groove 122b.

The lower central pin 313 is formed in a center portion of the mandibular impression tray 300 in the right-to-left direction (X1X2 direction). The lower central pin 313 is formed in a cylindrical shape and is inserted into the lower central groove 132 of the support plate 100.

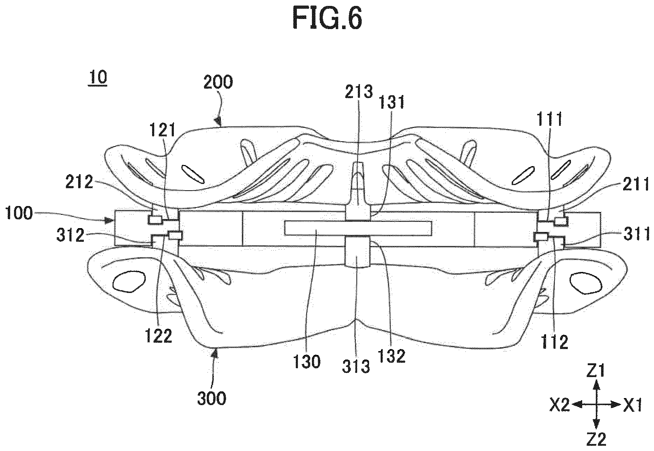

FIG. 6 is a back view of the dental tray system 10 in the embodiment.

As illustrated in FIG. 6, regarding the maxillary impression tray 200, the right upper engagement pin 211, the left upper engagement pin 212, and the upper central pin 213 are inserted into the right upper engagement groove 111, the left upper engagement groove 121, and the upper central groove 131, respectively, and are movably supported in the front-to-rear direction by the support plate 100. Also, by engaging the right upper engagement pin 211 and the left upper engagement pin 212 with the right upper engagement groove 111 and the left upper engagement groove 121 of the support plate 100, respectively, the maxillary impression tray 200 is movably supported in the front-to-rear direction without detaching from the support plate 100.

The right lower engagement pin 311, the left lower engagement pin 312, and the lower central pin 313 are inserted into the right lower engagement groove 112, the left lower engagement groove 122, and the lower central groove 132, respectively, the mandibular impression tray 300 is movably supported in the front-to-rear direction by the support plate 100. Also, the mandibular impression tray 300 is movably supported in the front-to-rear direction without detaching from the support plate 100 by engaging the right lower engagement pin 311 and the left lower engagement pin 312 with the right lower engagement groove 112 and the left lower engagement groove 122 of the support plate 100, respectively.

As illustrated in FIG. 6, the dental tray system 10 is used for the bite registration, in which the impression material is filled in the maxillary impression tray 200 and the mandibular impression tray 300, in a state in which the maxillary impression tray 200 and the mandibular impression tray 300 are supported by the support plate 100.

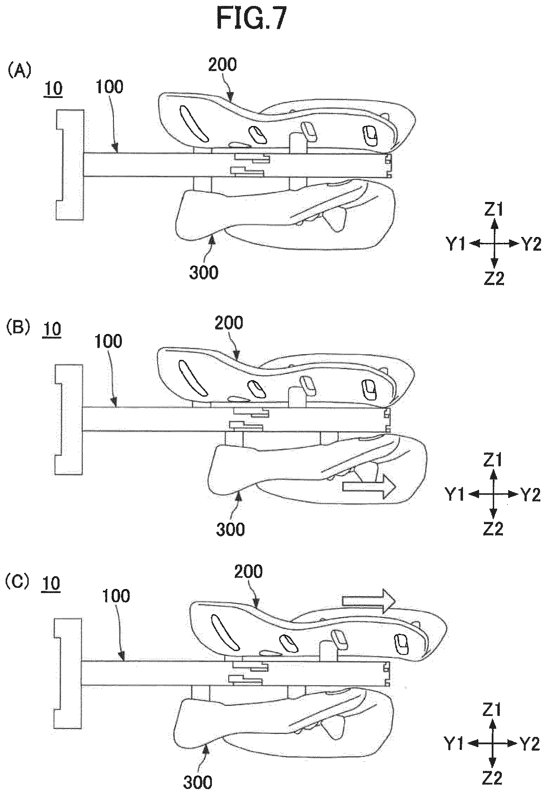

FIG. 7 is a diagram illustrating how the maxillary impression tray 200 and the mandibular impression tray 300 in the embodiment move with respect to the support plate 100.

For example, in a case in which there is no significant misalignment between positions of an upper jaw and a lower jaw of a patient and an occlusal relationship is normal, as illustrated in FIG. 7A, it is possible to perform the bite registration of the patient in a state in which the maxillary impression tray 200 and the mandibular impression tray 300 are placed at approximately the same position in the front-to-rear direction (Y1Y2) direction.

For example, in a case of the occlusion relationship in which the upper jaw protrudes to the lip side rather than the lower jaw, the mandibular impression tray 300 is moved backward in the oral cavity of the patient, as illustrated in FIG. 7B. As described above, by moving the mandibular impression tray 300 backward more than the maxillary impression tray 200, it is possible to accurately perform the bite registration even in the occlusal relationship where the upper jaw protrudes to the lip side more than the lower jaw.

Moreover, for example, in the case of the occlusal relationship where the upper jaw protrudes to the lip side more than the lower jaw, the maxillary impression tray 200 is moved backward in the oral cavity of the patient, as illustrated in FIG. 7C. As described above, by moving the maxillary impression tray 200 backward more than the mandibular impression tray 300, it is possible to accurately perform the bite registration even in the occlusal relationship where the lower jaw protrudes to the lip side more than the upper jaw.

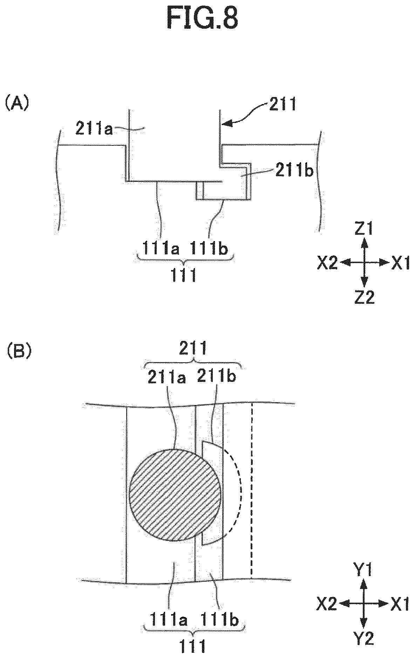

FIG. 8 is a diagram illustrating a state in which the right upper engagement pin 211 is inserted into the right upper engagement groove 111, in the embodiment. FIG. 8A is a side view of the right upper engagement pin 211 and the right upper engagement groove 111. FIG. 8B is a view from a top view of an XY cross-section through the pin body 211a of the right upper engagement pin 211 inserted in the right upper engagement groove 111.

FIG. 8 illustrates the right upper engagement pin 211 and the right upper engagement groove 111 in a state in which the upper central pin 213 is inserted into the upper central groove 131 and the maxillary impression tray 200 does not rotate relative to the support plate 100.

As illustrated in FIG. 8A, the right upper engagement pin 211 is inserted into the right upper engagement groove 111 such that the engagement portion 211b fits into the engagement groove 111b. The engagement portion 211b of the right upper engagement pin 211 is formed in a shape of a semi-disk projecting in the X1 direction from a lower end of the pin body 211a, as depicted in FIG. 8A and FIG. 8B.

The right upper engagement groove 111 and the right upper engagement pin 211 are formed so as to form a gap, and engage each other between a side wall of the right upper engagement groove 111 and the outer peripheral surface of the right upper engagement pin 211, as depicted in FIG. 8. Thus, the gap is formed between the right upper engagement groove 111 and the right upper engagement pin 211, so that the right upper engagement pin 211 is rotatable in the right upper engagement groove 111.

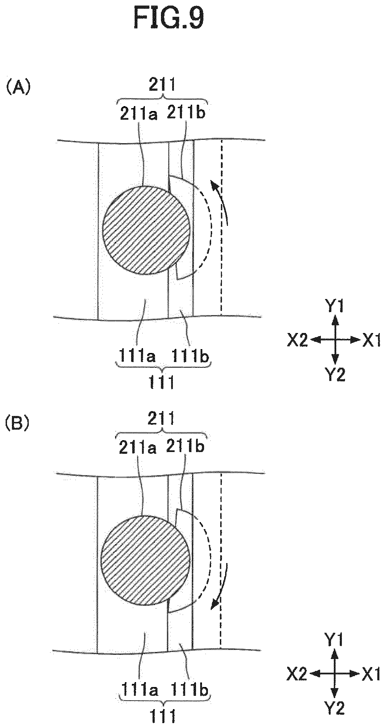

FIG. 9 is a diagram illustrating a state in which the right upper engagement pin 211 rotates in the right upper engagement groove 111, in the embodiment. FIG. 9A illustrates the right upper engagement pin 211 swinging counterclockwise in the right upper engagement groove 111. FIG. 9B illustrates a view in which the right upper engagement pin 211 rotates clockwise in the right upper engagement groove 111.

As illustrated in FIG. 9A and FIG. 9B, the right upper engagement pin 211 may rotate so that the engagement portion 211b does not contact a side wall of the engagement groove 111b of the right upper engagement groove 111. In this embodiment, the pin body 211a of the right upper engagement pin 211 is formed in a cylindrical shape so as not to contact the side wall of the right upper engagement groove 111 and prevent rotational movement.

Although the right upper engagement groove 111 and the right upper engagement pin 211 have been illustrated, the left upper engagement groove 121 and the left upper engagement pin 212 are similarly formed and the left upper engagement pin 212 is rotatable in the left upper engagement groove 121. The same configuration as the right upper engagement groove 111 and the right upper engagement pin 211 enables the right lower engagement pin 311 to rotate in the right lower engagement groove 112, and the left lower engagement pin 312 to rotate in the left lower engagement groove 122.

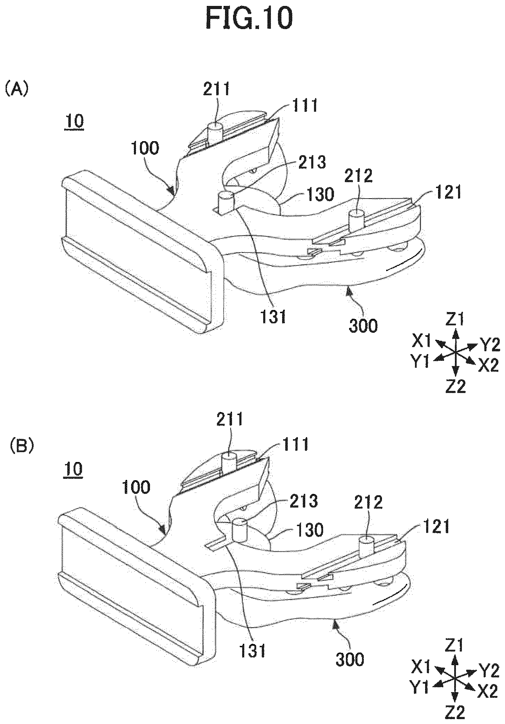

FIG. 10 is a diagram illustrating the upper central pin 213 of the maxillary impression tray 200 detached from the upper central groove 131 of the support plate 100. In FIG. 10, for the maxillary impression tray 200, only the right upper engagement pin 211, the left upper engagement pin 212, and the upper central pin 213 are depicted.

As illustrated in FIG. 10A, the maxillary impression tray 200 is moveably supported in the forward and backward directions by the support plate 100 by the right upper engagement pin 211 inserted into the right upper engagement groove 111, the left upper engagement pin 212 inserted into the left upper engagement groove 121, and the upper central pin 213 inserted into the upper central groove 131.

The upper central groove 131 of the support plate 100 is formed so that a rear end is opened and leads to the support base 130. Accordingly, when the maxillary impression tray 200 is moved more backward than a length of the upper central groove 131, the upper central pin 213 is removed from the upper central groove 131 and is moveable back and forth and left and right on the support platform 130, as illustrated in FIG. 10B.

As described above, the right upper engagement pin 211 is formed in the right upper engagement groove 111, such that it is callable of rotating. The left upper engagement pin 212 is formed in the left upper engagement groove 121, such that it is callable of rotating. With this configuration, the maxillary impression tray 200 is rotatable relative to the support plate 100 by allowing the upper central pin 213 to move back and forth left and right away from the upper central groove 131.

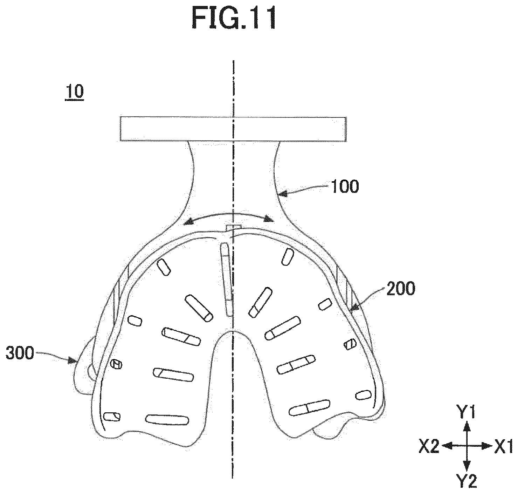

FIG. 11 is a diagram illustrating how the maxillary impression tray 200 rotates in the embodiment.

The maxillary impression tray 200 is moved backward (in the Y2 direction) and the upper central pin 213 is removed from the upper central groove 131 so as to be rotatable, for example, in a counterclockwise direction by a predetermined angle, as illustrated in FIG. 11. Also, the maxillary impression tray 200 is rotated in the clockwise direction by a predetermined angle.

Even if it is removed from the upper central groove 131, the upper central pin 213 has a lower end surface that abuts the support base 130 and is supported by the support base 130. As described above, because the upper central pin 213 is supported on the support platform 130, the maxillary impression tray 200 is supported on the support plate 100 without downward tilting of the front portion even though the upper central pin 213 is rotatable away from the upper central groove 131.

A manner, in which the maxillary impression tray 200 rotates, is described, and the mandibular impression tray 300 rotates in the same manner. The mandibular impression tray 300 is moved backward (in the Y2 direction) and the lower central pin 313 is removed from the lower central groove 132, thereby allowing the mandibular impression tray 300 to rotate in a counterclockwise direction and a clockwise direction relative to the support plate 100 within a predetermined angle range.

Thus, in the dental tray system 10 of the embodiment, the support plate 100 is movably supported and rotatably supported in the forward and backward directions, respectively, with the maxillary impression tray 200 and the mandibular impression tray 300.

Therefore, according to the dental tray system 10 of the embodiment, it is possible to respond not only to the forward and backward directions between the upper jaw and the lower jaw, but also to the right-to-lefts direction, so that the bite registration can be accurately performed according to anteroposterior and lateral occlusion states related to the maxilla and the mandible.

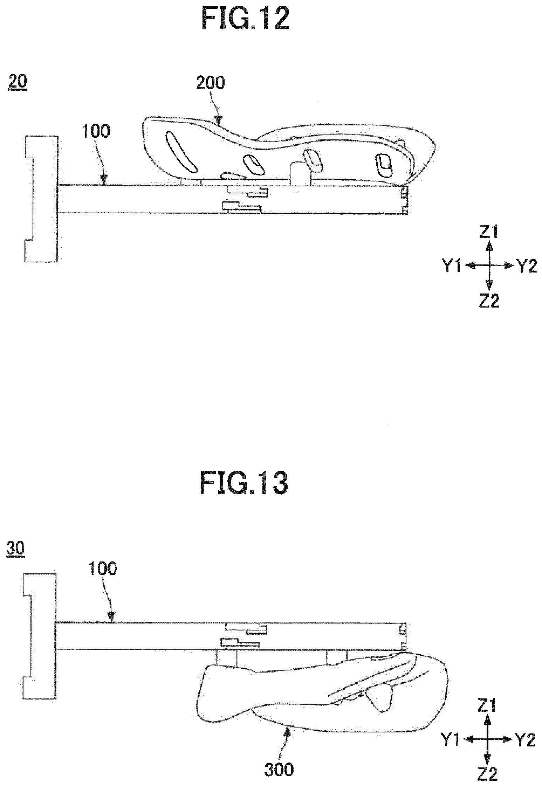

For example, when only the upper jaw side is used as a denture, only the maxillary impression can be taken by the dental tray system 20 having the maxillary impression tray 200 attached to the support plate 100 as illustrated in FIG. 12. For example, in a case in which only the upper jaw side is used as a denture, only the mandibular impression can be taken by the dental tray system 30 with the mandibular impression tray 300 attached to the support plate 100, as illustrated in FIG. 13.

Although the dental tray system according to the embodiment has been described above, the present invention is not limited to the above-described embodiment, and various modifications and improvements are possible within the scope of the present invention.

For example, shapes of the support plate 100, the maxillary impression tray 200, and the mandibular impression tray 300 are not limited to the shapes illustrated in the embodiment described above. The number of engagement grooves formed on the support plate 100, the number of engagement pins formed on the maxillary impression tray 200, and the mandibular impression tray 300 are not limited to the numbers illustrated in the above described embodiment. Also, the shapes of the engagement grooves formed on the support plate 100, and the shapes of engagement pins formed on the maxillary impression tray 200 and the mandibular impression tray 300 are not limited to the shapes illustrated in the above described embodiment. If the maxillary impression tray 200 and the mandibular impression tray 300 can be moved in the forward and backward directions without departing from the support plate 100, the engagement grooves and the engagement pins may be in different shapes from those in the embodiment. Furthermore, a circular end of the engagement portion 211b can be rounded to expand the range of rotation.

The patent application is based upon and claims the benefit of priority to Japanese Patent Application No. 2016-231328 filed November 29, 2016, and the entire content of Japanese Patent Application No. 2016-231328 is hereby incorporated herein by reference.

### DESCRIPTION OF THE REFERENCE NUMERALS

- 10, 20, 30: dental tray system
- 100: support plate
- 200: maxillary impression tray
- 300: mandibular impression tray
- 111: right upper engagement groove (upper engagement groove)
- 112: right lower engagement groove (lower engagement groove)
- 121: left upper engagement groove (upper engagement groove)
- 122: lower left engagement groove (lower engagement groove)
- 131: upper central groove
- 132: lower central groove
- 211: right upper engagement pin (upper engagement pin)
- 212: left upper engagement pin (upper engagement pin)
- 213: upper central pin
- 311: right lower engagement pin (lower engagement pin)
- 312: left lower engagement pin (lower engagement pin)
- 313: lower central pin

## Claims

1. A dental tray system, comprising:
a maxillary impression tray configured to be filled with an impression material and to take an impression of an upper jaw side in an oral cavity;
a mandibular impression tray configured to be filled with the impression material and to take the impression of a lower jaw side in the oral cavity; and
a support plate provided between the maxillary impression tray and the mandibular impression tray, and configured to movably support the maxillary impression tray and the mandibular impression tray in a front-to-rear direction and to rotatably support the maxillary impression tray and the mandibular impression tray.

2. The dental tray system as claimed in claim 1, wherein the support plate includes
an upper engagement groove formed along the front-to-rear direction on an upper surface supporting the maxillary impression tray; and
a lower engagement groove formed along the front-to-rear direction on a lower surface supporting the mandibular impression tray,
wherein the maxillary impression tray includes an upper engagement pin, which protrudes toward the support plate to engage in a loose fit in the upper engagement groove and is movable along the upper engagement groove, and
the mandibular impression tray includes a lower engagement pin, which protrudes toward the support plate to engage in a loose fit in the lower engagement groove and is movable along the lower engagement groove,
wherein the upper engagement pin rotates while engaging the upper engagement groove, so that the maxillary impression tray is rotated, and the lower engagement pin rotates while engaging the lower engagement groove, so that the mandibular impression tray is rotated.

3. The dental tray system as claimed in claim 2, wherein the maxillary impression tray includes an upper central pin that projects from a center in a right-to-left direction perpendicular to the front-to-rear direction toward the support plate and fits into an upper central groove formed in the support plate,
the mandibular impression tray includes a lower central pin that projects from the center in the right-to-left direction toward the support plate and fits into a lower central groove formed in the support plate, and
each of the upper central groove and the lower central groove is open to an end at a rear side.

4. A dental tray system, comprising:
an impression tray being filled with an impression material for taking an impression in an oral cavity; and
a support plate configured to movably support the impression tray in a front-to-rear direction and to rotatably support the impression tray.

5. The dental tray system as claimed in claim 4, wherein
the support plate includes an engagement groove formed along the front-to-rear direction on a surface supporting the impression tray,
the impression tray includes an engagement pin that protrudes toward the support plate and engages in a loose fit in the engagement groove, and that is movable along the engagement groove, and
the engagement pin is rotated in an engagement with the engagement groove, so that the impression tray rotates.

6. The dental tray system as claimed in claim 5, wherein the impression tray includes a central pin that projects from a center in a right-to-left direction perpendicular to the front-to-rear direction toward the support plate, and that fits into a central groove formed in the support plate, and
the central groove opens an end at a rear side.
